# EUROPÄISCHE PATENTSCHRIFT

(11) **EP 3 452 737 B1**
(45) Veröffentlichungstag und Bekanntmachung des Hinweises auf die Patenterteilung: **30.12.2020**
(21) Anmeldenummer: 17777022.9
(22) Anmeldetag: 27.09.2017
(51) Int. Cl.: F16F 13/26

(54) **HYDROLAGER**
HYDROMOUNT
PALIER HYDRAULIQUE

(30) Priorität: 29.09.2016 DE 102016118563
(43) Veröffentlichungstag der Anmeldung: 13.03.2019
(73) Patentinhaber: Vibracoustic GmbH, 64293 Darmstadt (DE)
(72) Erfinder: LILLIGREEN, Michael, 67547 Worms (DE); PHILIPP, Jan, 64683 Einhausen (DE); SCHEMER, Thomas, 69469 Weinheim (DE); STÖCKER, Timo, 69502 Hemsbach (DE)
(74) Vertreter: Patentanwälte Olbricht Buchhold Keulertz
(86) Internationale Anmeldenummer: PCT/EP2017/074526
(87) Internationale Veröffentlichungsnummer: WO 2018/060268

(56) Entgegenhaltungen:
- EP-A1- 2 908 023
- FR-A1- 2 795 148

## Beschreibung

Die Erfindung betrifft ein Hydrolager zur Lagerung eines Kraftfahrzeugaggregats, insbesondere zur Lagerung eines Kraftfahrzeugmotors an einer Kraftfahrzeugkarosserie, mit einer Tragfeder, die einen Lagerkern abstützt und eine Arbeitskammer umschließt, und einer Ausgleichskammer, die von der Arbeitskammer durch eine Trennwand getrennt und von einer Ausgleichsmembran begrenzt ist, wobei die Ausgleichskammer und die Arbeitskammer mit einer Flüssigkeit gefüllt und über einen in die Trennwand eingebrachten Dämpfungskanal miteinander verbunden sind, und wobei die Trennwand zwei Trennplatten aufweist, zwischen denen eine Membran schwingfähig aufgenommen ist.

Derartige Hydrolager werden auch als hydraulisch dämpfende Lager bezeichnet und dienen zur Abstützung eines Kraftfahrzeugmotors an einer Kraftfahrzeugkarosserie, um einerseits die von Fahrbahnunebenheiten hervorgerufenen Schwingungen zu dämpfen und andererseits akustische Schwingungen zu isolieren. So bewirkt die aus einem elastomeren Material bestehende Tragfeder eine akustische Isolierung. Die von Fahrbahnunebenheiten hervorgerufenen Schwingungen werden durch ein hydraulisches System gedämpft, wobei das hydraulische System durch die flüssigkeitsgedämpfte Arbeitskammer, die Ausgleichskammer und den die beiden Kammern miteinander verbindenden Dämpfungskanal gebildet wird.

Die Arbeitskammer wird durch eine Bewegung der Tragfeder vergrößert oder verkleinert, wodurch ein hydraulischer Druck in der Arbeitskammer aufgebaut wird. Infolge des Drucks wird die in der Arbeitskammer befindliche Flüssigkeit über den Dämpfungskanal in die Ausgleichskammer gedrückt. Aufgrund des geringen Durchmessers des Dämpfungskanals und der damit verbundenen hohen mechanischen Übersetzung, die sich aus dem äquivalenten, verdrängenden Querschnitt der Tragfeder in Relation zu dem Dämpfungskanalquerschnitt ergibt, werden die eingeleiteten Schwingungen gedämpft.

Zur Entkopplung hochfrequenter, kleinamplitudiger Schwingungen, das heißt im akustisch relevanten Bereich, ist die Einbringung einer elastischen Membran mit oder ohne Spiel innerhalb der Trennwand bekannt. Hierbei schwingt die Membran bei hochfrequenten, kleinamplitudigen Schwingungen, sodass eine Dämpfung über den Dämpfungskanal entkoppelt wird.

Im Leerlaufbetrieb des Motors ist eine dynamische Absenkung erwünscht, die kleiner als die statische Steifigkeit des Lagers ist. Dahingegen wird im Fahrbetrieb eine hohe Steifigkeit des Lagers verlangt, um die erforderlichen Dämpfungseigenschaften zu erzielen. Hierzu ist es bekannt, das Hydrolager mit einer Schaltvorrichtung zu versehen, mit der das Lager an einen Fahrbetrieb oder einen Leerlaufbetrieb des Motors angepasst werden kann.

FR 2 795 148 A1 offenbart eine Vibrationsdämpfungsvorrichtung, welche mit einer Betriebsluftkammer versehen ist. Die Betriebsluftkammer ist über einen Luftkanal, der in ein Teilungselement eingebracht ist, mit einem Luftleitungssystem verbunden. Über das Luftleitungssystem sind der Luftkanal und somit die Betriebsluftkammer mit der Atmosphäre verbindbar. Das Luftleitungssystem umfasst eine Unterdruckquelle. Ein elektromagnetisch betätigtes Schaltventil trennt die Betriebsluftkammer von der Atmosphäre und der Unterdruckquelle. Darüber hinaus ist das Luftleitungssystem mit einem Druckregulierventil ausgerüstet, um im Falle eines zu hohen Unterdrucks in dem Luftleitungssystem den Druck in diesem und in der Betriebsluftkammer regulieren zu können.

DE 10 2014 118 502 A1 offenbart ein Hydrolager mit einer schaltbaren Entkopplungsmembran. Die Entkopplungsmembran ist mittels eines Schaltmagneten schaltbar. So kann die Entkopplungsmembran von einem Zustand geringer Steifigkeit in einen Zustand hoher Steifigkeit und zurück geschaltet werden.

Aus EP 2 103 837 A1 ist ein schaltbares elastisches Aggregatelager für ein Kraftfahrzeug bekannt, bei dem ein mit Hydraulikflüssigkeit gefüllter Arbeitsraum durch eine Entkopplungsmembran von einem Luftraum getrennt ist. Der Luftraum ist über einen Entlüftungskanal mit der Umgebung verbunden, wobei der Entlüftungskanal schaltbar ist.

Der Erfindung liegt die Aufgabe zugrunde, ein Lager zu schaffen, das eine verbesserte Steifigkeit aufweist.

Zur Lösung der Aufgabe wird ein Hydrolager mit den Merkmalen des Anspruchs 1 vorgeschlagen.

Vorteilhafte Ausgestaltungen des Hydrolagers sind Gegenstand der abhängigen Ansprüche.

Das erfindungsgemäße Hydrolager dient zur Lagerung eines Kraftfahrzeugaggregats, insbesondere zur Lagerung eines Kraftfahrzeugmotors an einer Kraftfahrzeugkarosserie, und umfasst eine Tragfeder, die einen Lagerkern abstützt und eine Arbeitskammer umschließt, und eine Ausgleichskammer, die von der Arbeitskammer durch eine Trennwand getrennt und von einer Ausgleichsmembran begrenzt ist, wobei die Ausgleichskammer und die Arbeitskammer mit einer Flüssigkeit gefüllt und über einen in die Trennwand eingebrachten Dämpfungskanal miteinander verbunden sind, wobei die Trennwand zwei Trennplatten aufweist, zwischen denen eine Membran schwingfähig aufgenommen ist, und wobei die Membran und die Trennwand eine Luftkammer begrenzen, die über eine Öffnung in der Trennwand mit der Umgebung verbindbar ist. Die Öffnung ist mittels einer schaltbaren Rückschlagvorrichtung freigebbar und verschließbar. Die Rückschlagvorrichtung weist ein druckbetätigbares Rückschlagventil auf, dessen Öffnungsdruck auf eine Schwingungsamplitude, insbesondere eine vorbestimmte und gezielt einstellbare Schwingungsamplitude, der Membran einstellbar ist.

Im Leerlaufbetrieb des Motors ist gewünscht, dass die Luftkammer mit Luft gefüllt ist. Die Membran schwingt in diesem Fall zusammen mit dem Luftvolumen in der Arbeitskammer, welches direkt im Austausch mit der Umgebung steht. In diesem Zustand weist das Hydrolager eine geringe Steifigkeit auf, und es können dadurch dynamische Steifigkeiten unterhalb der statischen Steifigkeit der Tragfeder erreicht werden. Dadurch schwingt die Membran mit Schwingungen, die eine niedrige Amplitude bei hoher Frequenz aufweisen, wie sie im Leerlaufbetrieb des Motors in das Lager eingebracht werden, und bewirkt eine Entkopplung. Durch die Entkopplung der Schwingungen wird eine Dämpfung verhindert.

Im Fahrbetrieb hingegen wirken Schwingungen auf das Lager, die eine hohe Amplitude bei geringer Frequenz aufweisen. In diesem Fall ist eine hohe Steifigkeit der Membran gewünscht, um die Schwingungen zu dämpfen. Um die Steifigkeit der Membran zu erhöhen, ist es im Fahrbetrieb vorteilhaft, dass die Luftkammer möglichst entleert ist. Durch das Entlüften und Belüften der Luftkammer kann die Steifigkeit der Membran beeinflusst werden, sodass das Lagerverhalten an den jeweiligen Fahrbetrieb angepasst werden kann. Mit dem Hydrolager kann eine besonders hohe Spreizung der Steifigkeit erzielt werden.

Das Rückschlagventil ermöglicht, dass die Luft nur aus der Luftkammer in die Umgebung entweichen kann, indem die Energie, die in das Lager aufgrund einer Anregung durch das Aggregat eingeleitet wird, genutzt werden kann, um die zwei Schaltzustände des Lagers, insbesondere den Zustand, in dem die Luftkammer ganz oder teilweise entleert ist, zu erreichen. Die Schaltbarkeit ermöglicht zusätzlich, dass die Luftkammer zwanghaft belüftet werden kann, sodass aus der Umgebung in die Luftkammer je nach Bedarf Luft strömen kann. Dadurch lässt sich das je nach Fahrzustand gewünschte Lagerverhalten unmittelbar beeinflussen. Insbesondere lässt sich eine für den Leerlaufbetrieb vorteilhafte Konfiguration herstellen, in der die Luftkammer im Austausch mit der Umgebung steht und somit immer mit Luft gefüllt ist.

Vorteilhaft erzeugt die Membran bei Erreichen der Schwingungsamplitude, insbesondere der vorbestimmten und gezielt einstellbaren Schwingungsamplitude, eine zum Öffnen des Rückschlagventils erforderliche Druckkraft. Diese Druckkraft entspricht dem Öffnungsdruck des Rückschlagventils.

Vorteilhaft entsteht die Schwingungsamplitude aufgrund eines in der Arbeitskammer wirkenden Drucks, der durch Anregung des Hydrolagers über das Kraftfahrzeugaggregat mit einer vorbestimmten Anregungsamplitude erzeugbar ist. Stöße von außen, die über den Lagerkern aufgenommen werden, bewirken eine Verformung der Tragfeder und dadurch eine Kompression der Arbeitskammer. Die in der Arbeitskammer befindliche Flüssigkeit wird komprimiert, sodass ein hydraulischer Druck in der Arbeitskammer erzeugt wird. Dieser Druck wirkt auf die Membran. Die Membran geht, angeregt durch die schwingende Flüssigkeit, in eine Schwingbewegung über und überträgt diese in die Luftkammer. Wenn die Schwingung in der Luftkammer eine gewisse Amplitude übersteigt, erhöht dies den Druck, der auf das Rückschlagventil wirkt, sodass das Rückschlagventil selbsttätig öffnet. Auf diese Weise kann die Energie, die durch von außen eingebrachte Stöße in dem Lager wirkt, zur Freigabe der Öffnung verwendet werden.

Durch Wiederholung dieses Prozesses wird die Luftkammer sukzessive entleert, bis keine Luft mehr in der Luftkammer vorhanden ist. Die von außen in das Lager eingebrachten Stöße bewirken so einen "Leerpumpeffekt" der Luftkammer, wodurch die Steifigkeit der Membran erhöht wird und das Hydrolager sehr hohe Dämpfungswerte erzielt.

Vorteilhaft weist die Rückschlagvorrichtung ein Federelement und eine Verschlusseinrichtung zum Verschließen der Öffnung auf, wobei das Federelement eine Zuhaltekraft auf die Verschlusseinrichtung ausübt, wobei das Federelement derart dimensioniert ist, dass die Verschlusseinrichtung bei Erreichen der Schwingungsamplitude, insbesondere der vorgegebenen und gezielt einstellbaren Schwingungsamplitude, die Öffnung freigibt. Das Federelement bewirkt demnach, dass die durch das Federelement erzeugte Zuhaltekraft die Öffnung mittels der Verschlusseinrichtung verschließt. Sobald die Schwingungsamplitude, die auf die Rückschlagvorrichtung wirkt, einen vorgegebenen Wert überschreitet, öffnet die Verschlusseinrichtung. Sobald die Schwingungsamplitude den vorgegebenen Wert unterschreitet, übersteigt die Zuhaltekraft die infolge der Schwingungsamplitude auf die Rückschlagvorrichtung wirkende Druckkraft, und die Rückschlagvorrichtung schließt selbsttätig. Die Schwingungsamplitude und die daraus resultierende Druckkraft, bei der die Verschlusseinrichtung die Öffnung freigibt, können demnach durch entsprechende Dimensionierung des Federelements eingestellt werden.

Vorteilhaft weist die Rückschlagvorrichtung ferner ein Anschlagelement zum Begrenzen einer Bewegung der Verschlusseinrichtung und ein mit der Verschlusseinrichtung verbundenes Verschlusselement auf. Wenn die auf die Rückschlagvorrichtung wirkende Druckkraft den vorgegebenen Wert überschreitet und die Rückschlagvorrichtung öffnet, bewegt sich die Verschlusseinrichtung und öffnet die Öffnung. Mittels des Anschlagelements wird die Bewegung der Verschlusseinrichtung begrenzt. Das Verschlusselement ist derart gestaltet, dass es die Öffnung dicht verschließen kann.

Vorteilhaft ist in einem ersten Schaltzustand die Luftkammer mit der Umgebung verbunden und in einem zweiten Schaltzustand die Luftkammer zu der Umgebung verschlossen. Die Schaltbarkeit ermöglicht, dass aus der Umgebung in die Luftkammer je nach Bedarf Luft strömen kann. Dadurch lässt sich das je nach Fahrzustand gewünschte Lagerverhalten unmittelbar beeinflussen. Insbesondere lässt sich eine für den Leerlaufbetrieb vorteilhafte Konfiguration herstellen, in der die Luftkammer im Austausch mit der Umgebung steht und somit immer mit Luft gefüllt ist.

Vorteilhaft ist das Rückschlagventil im zweiten Schaltzustand aktiv. Dies bedeutet, dass die Rückschlagvorrichtung im zweiten Schaltzustand nicht geschaltet ist. Demnach gibt das Rückschlagventil die Öffnung im zweiten Schaltzustand frei, wenn die vorbestimmte und gezielt einstellbare Schwingungsamplitude und die daraus resultierende Druckkraft erreicht werden, und verschließt diese, wenn die auf das Rückschlagventil wirkende Schwingung eine Amplitude aufweist, die geringer ist als die vorbestimmte und gezielt einstellbare Schwingungsamplitude.

Es ist vorteilhaft, dass die Rückschlagvorrichtung mittels eines Elektromagneten schaltbar ist. Durch die Schaltbarkeit kann die Rückschlagvorrichtung auch dann die Öffnung freigeben, wenn die auf die Verschlusseinrichtung wirkende Drucckraft nicht den vorgegebenen Wert überschreitet, da die erforderliche Kraft durch den Elektromagneten erzeugt werden kann. Die für diese Schaltbarkeit erforderlichen Elektroanschlüsse sind in heutigen Kraftfahrzeugmodellen üblicherweise verfügbar. Eine Schaltbarkeit mittels Elektromagnet ist außerdem günstig und kompakt realisierbar. Darüber hinaus kann die Rückschlagvorrichtung auch mittels Unterdruck geschaltet werden.

Der Elektromagnet kann eine Spule und einen Kern aufweisen. Der Kern ist innerhalb der Spule angeordnet. Durch Anlegen einer Spannung an der Spule wird ein Magnetfeld erzeugt, dass den Kern in Bewegung versetzt. Der Kern bewegt die Verschlusseinrichtung. Insbesondere kann die Verschlusseinrichtung gleichzeitig den Kern darstellen. Durch die Bewegung der Verschlusseinrichtung wird die Öffnung durch die Rückschlagvorrichtung freigegeben.

Vorteilhaft ist die Rückschlagvorrichtung in einem Topfelement aufgenommen, das mit dem Auflager verbunden ist. Eine derartige Gestaltung ermöglicht eine kompakte Bauweise, was besonders im Kraftfahrzeugbau aufgrund der engen Bauräume von Vorteil ist. Vorteilhaft ist das Topfelement durch Umbiegen des Auflagers von selbigem festgelegt. Dies stellt eine besonders kostengünstige Festlegung des Topfelements an dem Auflager dar.

Vorteilhaft ist die der Arbeitskammer zugewandte Trennplatte als Düsenplatte ausgebildet. Dadurch können Schwingungen der Flüssigkeit, die durch einen Stoß auf den Lagerkern und die dadurch bedingte Kompression der Arbeitskammer in die Arbeitskammer eingebracht werden, auf die Membran übertragen werden, sodass diese eine Schwingbewegung aufnimmt, wodurch die Schwingung weiter auf die Rückschlagvorrichtung übertragen wird.

Vorteilhaft ist die Öffnung in die der Arbeitskammer abgewandte Trennplatte eingebracht. Dadurch wird die Luftkammer durch die Membran und die der Arbeitskammer abgewandte Trennplatte begrenzt. Die Trennplatte kann so eine Doppelfunktion erfüllen. Vorteilhaft hat die Trennplatte im Bereich der Luftkammer eine näherungsweise glockenförmige Kontur, sodass die Membran im entleerten Zustand der Luftkammer eine möglichst große Verformung aufweist.

Im Folgenden wird die Erfindung schematisch mit Bezug auf Zeichnungen anhand von Ausführungsbeispielen beschrieben. In den Zeichnungen zeigen:
- Fig. 1: eine Querschnittsansicht eines Ausführungsbeispiels des Hydrolagers, bei der die Luftkammer vollständig gefüllt ist;
- Fig. 2: eine Querschnittsansicht des Hydrolagers aus Fig. 1, bei der die Luftkammer teileweise entleert ist;
- Fig. 3: eine Querschnittsansicht des Hydrolagers aus Fig. 1 und Fig. 2, bei der die Luftkammer vollständig entleert ist und
- Fig. 4: eine vergrößerte Ansicht der Luftkammer, der Membran, der Rückschlagvorrichtung und des Elektromagneten.

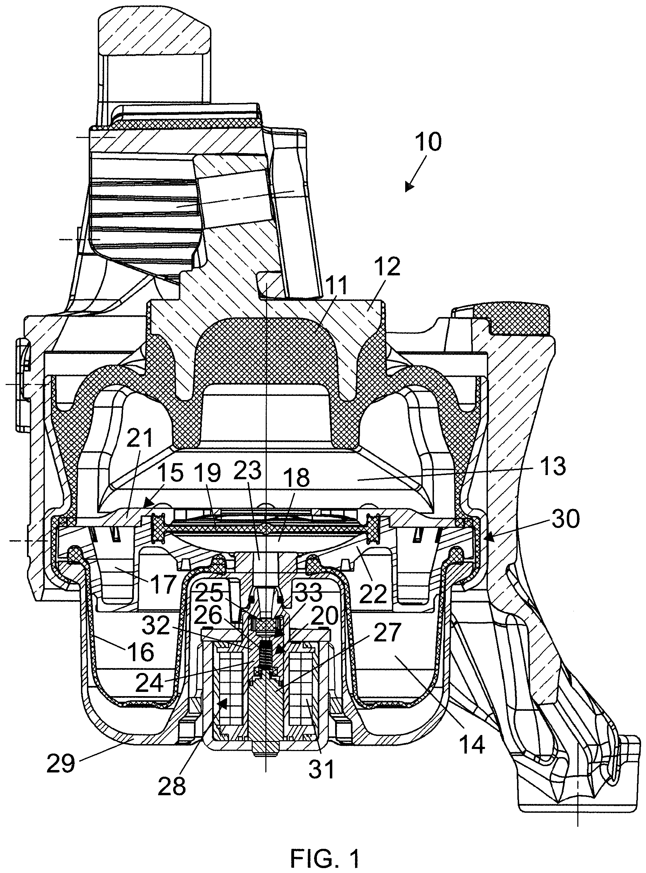

Fig. 1 zeigt ein Hydrolager 10 zur Lagerung eines nicht dargestellten Kraftfahrzeugaggregats, insbesondere zur Lagerung eines Kraftfahrzeugmotors an einer nicht dargestellten Kraftfahrzeugkarosserie. Das Hydrolager 10 weist eine Tragfeder 11 aus einem elastomeren Werkstoff zur Abstützung eines einvulkanisierten Lagerkerns 12 auf. An dem Lagerkern 12 ist der Kraftfahrzeugmotor befestigt (nicht dargestellt).

Die Tragfeder 11 begrenzt eine Arbeitskammer 13, die mittels einer Trennwand 15 von einer Ausgleichskammer 14 getrennt ist. Die Ausgleichskammer 14 wird von einer Ausgleichsmembran 16 begrenzt, die auch als Rollbalg bezeichnet wird. Die Kammern 13 und 14 sind mit einer hydraulischen Flüssigkeit befüllt und über einen in der Trennwand 15 angeordneten Dämpfungskanal 17 flüssigkeitsleitend miteinander verbunden.

Die Trennwand 15 weist Trennplatten 21, 22 auf. Die Trennplatten 21, 22 können aus Kunststoff hergestellt sein. Zwischen den Trennplatten 21, 22 ist eine Membran 19 formschlüssig aufgenommen. Die der Arbeitskammer 13 zugewandte Trennplatte 21 ist als Düsenplatte ausgebildet.

Die Membran 19 und die der Arbeitskammer 13 abgewandte Trennplatte 22 begrenzen eine Luftkammer 18. Die Luftkammer 18 ist über eine Öffnung 23 mit der Umgebung verbindbar. Im vorliegenden Fall ist die Öffnung 23 in die der Arbeitskammer 13 abgewandte Trennplatte 22 eingebracht.

Die Öffnung 23 ist mittels einer schaltbaren Rückschlagvorrichtung 20 freigebbar und verschließbar, die ein druckbetätigbares Rückschlagventil 33 mit einem Federelement 26 und einer Verschlusseinrichtung 24 zum Verschließen der Öffnung 23 aufweist. Ferner weist die Rückschlagvorrichtung 20 ein Anschlagelement 27 zum Begrenzen einer Bewegung der Verschlusseinrichtung 24 sowie ein mit der Verschlusseinrichtung 24 verbundenes Verschlusselement 25 auf. Die Rückschlagvorrichtung 20 ist in einem Topfelement 29 aufgenommen, das mit dem Auflager 30 verbunden ist. In die Öffnung 23 greift ein Vorsprung des Topfelements 29 ein.

In einem ersten Schaltzustand ist die Luftkammer 18 mit der Umgebung verbunden, und in einem zweiten Schaltzustand ist die Luftkammer 18 zu der Umgebung verschlossen. Im zweiten Schaltzustand ist das Rückschlagventil 33 aktiv. Dies bedeutet, dass die Rückschlagvorrichtung 20 im zweiten Schaltzustand nicht geschaltet ist. Demnach gibt das Rückschlagventil 33 die Öffnung 23 im zweiten Schaltzustand frei, wenn eine vorbestimmte und gezielt einstellbare Schwingungsamplitude und die daraus resultierende Druckkraft, die einem Öffnungsdruck entspricht, erreicht werden, und verschließt diese, wenn die auf das Rückschlagventil 33 wirkende Druckkraft geringer ist als die Zuhaltekraft des Federelementes 26.

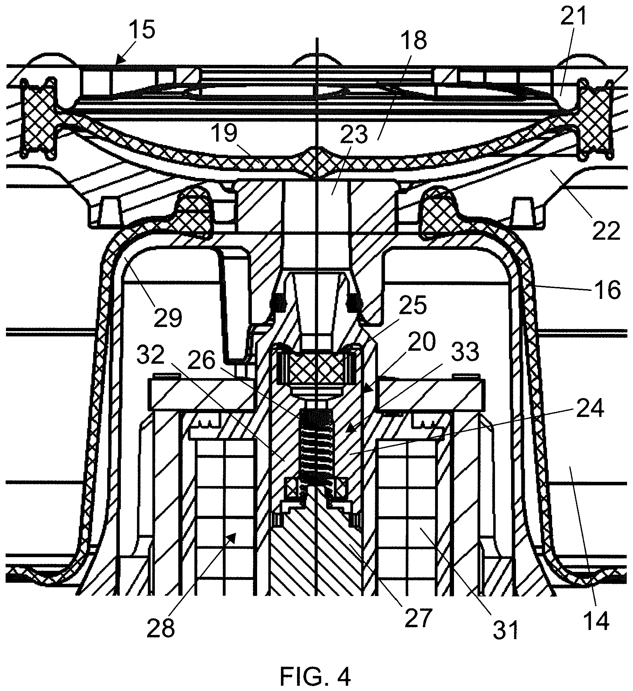

Im vorliegenden Beispiel weist die Rückschlagvorrichtung 20 einen Elektromagneten 28 auf, mittels dem die Rückschlagvorrichtung 20 schaltbar ist. Wie in Fig. 4 ersichtlich ist, weist der Elektromagnet 28 eine Spule 31 und einen Kern 32 auf. Der Kern 32 ist innerhalb der Spule 31 angeordnet. Durch Anlegen einer Spannung an der Spule 31 wird ein Magnetfeld erzeugt, dass den Kern 32 in Bewegung versetzt. Im vorliegenden Fall stellt die Verschlusseinrichtung 24 gleichzeitig den Kern 32 dar. Durch die Bewegung der Verschlusseinrichtung 24 wird die Öffnung 23 durch die Rückschlagvorrichtung 20 freigegeben.

Wenn von außen über den Lagerkern 12 eine Schwingung in das Lager 10 eingeleitet wird, bewirkt diese eine Bewegung des Lagerkerns 12 und der Tragfeder 11 zu der Arbeitskammer 13 hin. Das Volumen der Arbeitskammer 13 wird dadurch verkleinert, die darin befindliche hydraulische Flüssigkeit komprimiert, und es entsteht in der Arbeitskammer 13 durch den dort wirkenden Druck eine Schwingung der hydraulischen Flüssigkeit. Zum einen schwingt die hydraulische Flüssigkeit durch den Dämpfungskanal 17 der Trennwand 15 in die Ausgleichskammer 14 und bewirkt so eine Dämpfung. Zum anderen schwingt die hydraulische Flüssigkeit durch die als Düsenplatte ausgebildete Trennplatte 21 gegen die Membran 19. Dies regt eine Schwingung der Membran 19 an, sodass diese beginnt, gegen die in der Luftkammer 18 befindliche Luft zu schwingen. So erzeugt die Membran 19 über die in der Luftkammer 18 schwingende Luft eine Druckkraft auf die Rückschlagvorrichtung 20, insbesondere auf das Verschlusselement 25. Wenn die Schwingungsamplitude einen vorbestimmten und gezielt einstellbaren Wert überschreitet, wird die Druckkraft so groß, dass das Verschlusselement 25 und die Verschlusseinrichtung 24 gegen die durch das Federelement 26 bewirkte Zuhaltekraft so bewegt werden, dass die Öffnung 23 freigegeben wird. Durch geeignete Dimensionierung des Federelements 26 können also die vorbestimmte und gezielt einstellbare Schwingungsamplitude und die daraus resultierende vorbestimmte Druckkraft eingestellt werden, die erforderlich sind, damit die Öffnung 23 durch die Rückschlagvorrichtung 20 freigegeben wird.

Aufgrund des zu diesem Zeitpunkt in der Luftkammer 18 vorhandenen Überdrucks strömt die Luft durch die Öffnung 23 und die Rückschlagvorrichtung 20 aus der Luftkammer 18 heraus. Der Luftdruck in der Luftkammer 18 nimmt dadurch ab, bis die auf das Verschlusselement 25 wirkende Druckkraft die des Federelements 26 wieder unterschreitet. Aufgrund der durch das Federelement 26 bewirkten Zuhaltekraft schließt die Rückschlagvorrichtung 20 in diesem Fall, und das Herausströmen der Luft aus der Luftkammer 18 wird so unterbunden.

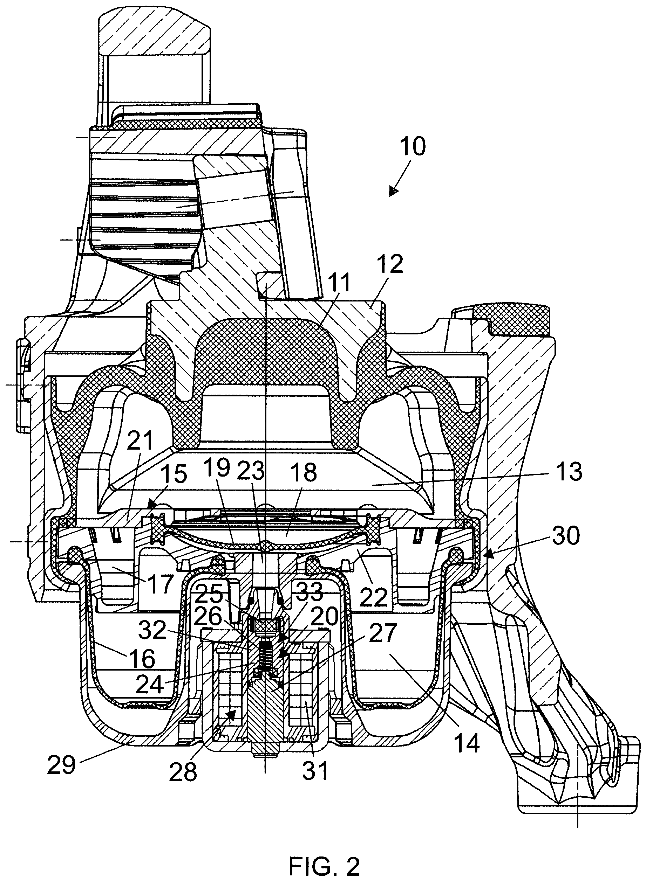

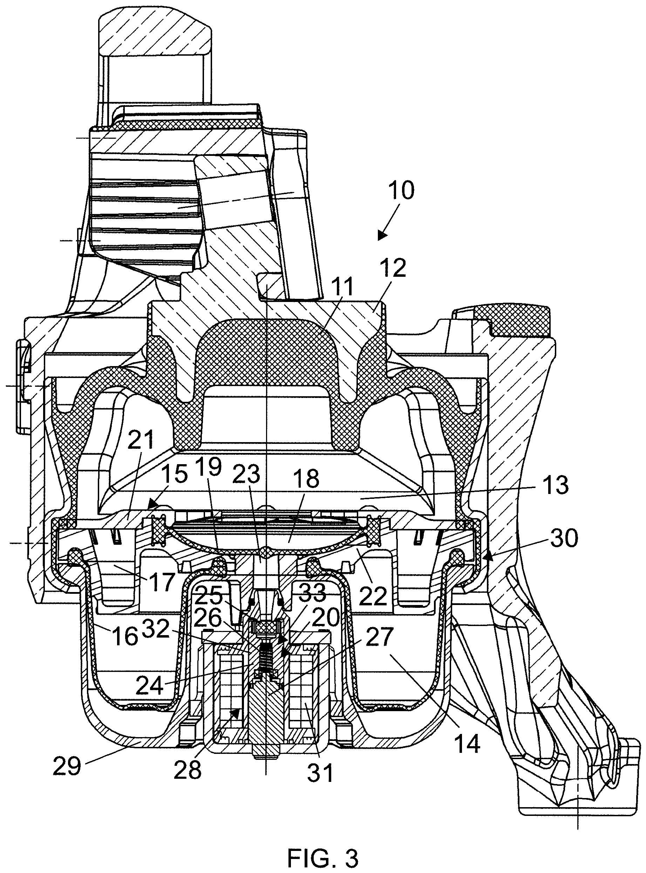

Fig. 2 zeigt einen Zustand, in dem die Luftkammer 18 bereits teilweise entleert ist. Durch Wiederholung des oben beschriebenen Prozesses wird die Luftkammer 18 sukzessive entleert, bis keine Luft mehr in der Luftkammer 18 vorhanden ist. Dieser Zustand, in dem die Luftkammer 18 vollständig entleert ist, ist in Fig. 3 dargestellt. Die Membran 19 ist dort vollständig durchgedrückt dargestellt. Die von außen in das Lager 10 eingebrachten Stöße bewirken so einen "Leerpumpeffekt" der Luftkammer 18, wodurch die Steifigkeit der Membran 19 erhöht wird und das Hydrolager 10 sehr hohe Dämpfungswerte erzielt.

Gegenteilig zum Fahrbetrieb, in dem eine hohe Steifigkeit der Membran 19 erwünscht ist, ist es im Leerlaufbetrieb des Motors gewünscht, wenn die Membran 19 elastisches Verhalten zeigt. Bei den dann auftretenden Schwingungen, die eine hohe Frequenz bei geringer Amplitude aufweisen, soll die Membran 19 mit der hydraulischen Flüssigkeit schwingen. Eine Dämpfung durch das Hydrolager 10 über den Dämpfungskanal 17 ist unerwünscht. Hierzu ist die Luftkammer 18 mit Luft gefüllt.

Um diesen Zustand herzustellen, wird der Elektromagnet 28 bestromt. Dadurch erzeugt der Elektromagnet 28 eine Kraft, die größer ist als die Zuhaltekraft des Federelementes 26, so dass das Verschlusselement 25 und die Verschlusseinrichtung 24 die Öffnung freigeben, ohne dass eine durch die in der Luftkammer 18 schwingende Luft bewirkte Druckkraft auf die Rückschlagvorrichtung 20 wirkt. Aus der Umgebung strömt Luft in die Luftkammer 18, sodass die Membran 19 wieder die Stellung einnimmt, wie sie in Fig. 1 dargestellt ist. In diesem Zustand ist die Membran 19 elastisch und schwingt gegen die Luft in der Luftkammer.

Das Hydrolager 10 weist aufgrund seiner Adaptierbarkeit an die jeweilige Fahrsituation eine verbesserte Steifigkeit auf. Insbesondere ist eine große Spreizung der mit dem Hydrolager 10 erzielbaren Steifigkeit gewährleistet. Die vorliegende Ausgestaltung ermöglicht es, dass die ohnehin von außen in das Lager 10 eingebrachte Energie zur Herstellung der gewünschten Steifigkeit der Membran 19 verwendet werden kann.

### Bezugszeichenliste

- 10: Hydrolager
- 11: Tragfeder
- 12: Lagerkern
- 13: Arbeitskammer
- 14: Ausgleichskammer
- 15: Trennwand
- 16: Ausgleichsmembran
- 17: Dämpfungskanal
- 18: Luftkammer
- 19: Membran
- 20: Rückschlagvorrichtung
- 21: Trennplatte
- 22: Trennplatte
- 23: Öffnung
- 24: Verschlusseinrichtung
- 25: Verschlusselement
- 26: Federelement
- 27: Anschlagelement
- 28: Elektromagnet
- 29: Topfelement
- 30: Auflager
- 31: Spule
- 32: Kern
- 33: Rückschlagventil

## Patentansprüche

1. Hydrolager (10) zur Lagerung eines Kraftfahrzeugaggregats, insbesondere zur Lagerung eines Kraftfahrzeugmotors an einer Kraftfahrzeugkarosserie, mit einer Tragfeder (11), die einen Lagerkern (12) abstützt und eine Arbeitskammer (13) umschließt, und einer Ausgleichskammer (14), die von der Arbeitskammer (13) durch eine Trennwand (15) getrennt und von einer Ausgleichsmembran (16) begrenzt ist, wobei die Ausgleichskammer (14) und die Arbeitskammer (13) mit einer Flüssigkeit gefüllt und über einen in die Trennwand (15) eingebrachten Dämpfungskanal (17) miteinander verbunden sind, wobei die Trennwand (15) zwei Trennplatten (21, 22) aufweist, zwischen denen eine Membran (19) schwingfähig aufgenommen ist, wobei die Membran (19) und die Trennwand (15) eine Luftkammer (18) begrenzen, die über eine Öffnung (23) in der Trennwand (15) mit der Umgebung verbindbar ist, wobei die Öffnung (23) mittels einer Rückschlagvorrichtung (20) freigebbar und verschließbar ist, und wobei die Rückschlagvorrichtung (20) ein druckbetätigbares Rückschlagventil (33) aufweist, **dadurch gekennzeichnet, dass** die Rückschlagvorrichtung (20) schaltbar ist und der Öffnungsdruck des Rückschlagventils (33) auf eine Schwingungsamplitude der Membran (19) einstellbar ist.

2. Hydrolager (10) nach Anspruch 1, **dadurch gekennzeichnet, dass** die Membran (19) bei Erreichen der Schwingungsamplitude eine zum Öffnen des Rückschlagventils (33) erforderliche Druckkraft erzeugt.

3. Hydrolager (10) nach Anspruch 1 oder 2, **dadurch gekennzeichnet, dass** die Schwingungsamplitude aufgrund eines in der Arbeitskammer (13) wirkenden Drucks entsteht, der durch Anregung des Hydrolagers (10) über das Kraftfahrzeugaggregat mit einer vorbestimmten Anregungsamplitude erzeugbar ist.

4. Hydrolager (10) nach einem der Ansprüche 1 bis 3, **dadurch gekennzeichnet, dass** die Rückschlagvorrichtung (20) ein Federelement (26) und eine Verschlusseinrichtung (24) zum Verschließen der Öffnung (23) aufweist, wobei das Federelement (26) eine Zuhaltekraft auf die Verschlusseinrichtung (24) ausübt, wobei das Federelement (26) derart dimensioniert ist, dass die Verschlusseinrichtung (24) bei Erreichen der Schwingungsamplitude die Öffnung (23) freigibt.

5. Hydrolager (10) nach Anspruch 4, **dadurch gekennzeichnet, dass** die Rückschlagvorrichtung (20) ferner ein Anschlagelement (27) zum Begrenzen einer Bewegung der Verschlusseinrichtung (24) und ein mit der Verschlusseinrichtung (24) verbundenes Verschlusselement (25) aufweist.

6. Hydrolager (10) nach einem Ansprüche 1 bis 5, **dadurch gekennzeichnet, dass** in einem ersten Schaltzustand die Luftkammer (18) mit der Umgebung verbunden ist und in einem zweiten Schaltzustand die Luftkammer (18) zu der Umgebung verschlossen ist.

7. Hydrolager nach Anspruch 6, **dadurch gekennzeichnet, dass** das Rückschlagventil (33) im zweiten Schaltzustand aktiv ist.

8. Hydrolager (10) nach einem der Ansprüche 1 bis 7, **dadurch gekennzeichnet, dass** die Rückschlagvorrichtung (20) mittels eines Elektromagneten (28) schaltbar ist.

9. Hydrolager nach einem der Ansprüche 1 bis 8, **dadurch gekennzeichnet, dass** die Rückschlagvorrichtung (20) in einem Topfelement (29) aufgenommen ist, das mit dem Auflager (30) verbunden ist.

10. Hydrolager nach einem der Ansprüche 1 bis 9, **dadurch gekennzeichnet, dass** die der Arbeitskammer (13) zugewandte Trennplatte (21) als Düsenplatte ausgebildet ist.

11. Hydrolager nach einem der Ansprüche 1 bis 10, **dadurch gekennzeichnet, dass** die Öffnung (23) in die der Arbeitskammer (13) abgewandte Trennplatte (21) eingebracht ist.

## Claims

1. Hydromount (10) for mounting a motor vehicle unit, in particular for mounting a motor vehicle engine on a motor vehicle body, having a bearing spring (11), which supports a bearing core (12) and encloses a working chamber (13), and a compensation chamber (14), which is separated from the working chamber (13) by a partition wall (15) and which is bounded by a compensating diaphragm (16), the compensating chamber (14) and the working chamber (13) being filled with a liquid and being connected to one another via a damping channel (17) introduced into the partition wall (15), the partition wall (15) comprising two separating plates (21, 22), wherein a diaphragm (19) is received between the separating plate in an oscillating manner, wherein the diaphragm (19) and the partition wall (15) define an air chamber (18), which can be connected to the environment via an opening (23) in the partition wall (15), wherein the opening (23) is openable and closable by a non-return device (20), and wherein the non-return device (20) has a pressure-actuable non-return valve (33), **characterised in that** the non-return device (20) is switchable and the opening pressure of the non-return valve (33) is adjustable to an oscillation amplitude of the diaphragm (19).

2. Hydromount (10) according to claim 1, **characterised in that** the diaphragm (19) generates a pressure force required to open the non-return valve (33) when the oscillation amplitude is reached.

3. Hydromount (10) according to claim 1 or 2, **characterised in that** the oscillation amplitude is produced as a result of a pressure acting in the working chamber (13), which can be generated with a predetermined excitation amplitude by excitation of the hydromount (10) via the motor vehicle unit.

4. Hydromount (10) according to one of claims 1 to 3, **characterized in that** the non-return device (20) has a spring element (26) and a closing device (24) for closing the opening (23), the spring element (26) exerting a locking force on the closing device (24), the spring element (26) being dimensioned in such a way that the closing device (24) opens the opening (23) when the oscillation amplitude is reached.

5. Hydromount (10) according to claim 4, **characterized in that** the non-return device (20) further comprises a stop element (27) for limiting a movement of the closure device (24) and a closure element (25) connected to the closure device (24).

6. Hydromount (10) according to a claim 1 to 5, **characterized in that** in a first switching state the air chamber (18) is connected to the environment and in a second switching state the air chamber (18) is closed to the environment.

7. Hydromount according to claim 6, **characterised in that** the non-return valve (33) is active in the second switching state.

8. Hydromount (10) according to one of claims 1 to 7, **characterised in that** the non-return device (20) is switchable by an electromagnet (28).

9. Hydromount according to one of claims 1 to 8, **characterised in that** the non-return device (20) is received in a pot element (29) which is connected to the support (30).

10. Hydromount according to one of claims 1 to 9, **characterised in that** the separating plate (21) facing the working chamber (13) is designed as a nozzle plate.

11. Hydromount according to one of claims 1 to 10, **characterised in that** the opening (23) is made in the separating plate (21) facing away from the working chamber (13).

## Revendications

1. Monture hydraulique (10) pour le montage d'une unité de véhicule automobile, en particulier pour le montage d'un moteur de véhicule automobile sur une carrosserie de véhicule automobile, avec un ressort de palier (11) qui supporte un noyau de palier (12) et qui entoure une chambre de travail (13), et une chambre de compensation (14), qui est séparée de la chambre de travail (13) par une paroi de séparation (15) et est délimitée par une membrane de compensation (16), la chambre de compensation (14) et la chambre de travail (13) étant remplies d'un liquide et étant reliées entre elles par un canal d'amortissement (17) introduit dans la paroi de séparation (15), la paroi de séparation (15) comprenant deux plaques de séparation (21, 22), entre lesquels une membrane (19) est reçue de manière oscillante, la membrane (19) et la paroi de séparation (15) définissant une chambre d'air (18) qui peut être reliée à l'environnement par une ouverture (23) dans la paroi de séparation (15), l'ouverture (23) pouvant être ouverte et fermée au moyen d'un dispositif anti-retour (20), et dans lequel le dispositif anti-retour (20) comporte un clapet anti-retour (33) actionnable par pression, **caractérisé en ce que** le dispositif anti-retour (20) est commutable et la pression d'ouverture du clapet anti-retour (33) est réglable sur une amplitude d'oscillation de la membrane (19).

2. Monture hydraulique (10) selon la revendication 1, **caractérisée en ce que** le diaphragme (19) génère une force de pression nécessaire pour ouvrir le clapet anti-retour (33) lorsque l'amplitude d'oscillation est atteinte.

3. Monture hydraulique (10) selon la revendication 1 ou 2, **caractérisée en ce que** l'amplitude de vibration est générée par une pression agissant dans la chambre de travail (13), laquelle pression peut être générée avec une amplitude d'excitation prédéterminée par l'excitation de la monture hydraulique (10) via l'unité de véhicule à moteur.

4. Monture hydraulique (10) selon l'une des revendications 1 à 3, **caractérisée en ce que** le dispositif anti-retour (20) présente un élément de ressort (26) et un dispositif de fermeture (24) pour fermer l'ouverture (23), l'élément de ressort (26) exerçant une force de verrouillage sur le dispositif de fermeture (24), l'élément de ressort (26) étant dimensionné de telle sorte que le dispositif de fermeture (24) ouvre l'ouverture (23) lorsque l'amplitude d'oscillation est atteinte.

5. Monture hydraulique (10) selon la revendication 4, **caractérisée en ce que** le dispositif anti-retour (20) comprend en outre un élément d'arrêt (27) pour limiter un mouvement du dispositif de fermeture (24) et un élément de fermeture (25) relié au dispositif de fermeture (24).

6. Monture hydraulique (10) selon les revendications 1 à 5, **caractérisée en ce que** dans un premier état de commutation, la chambre à air (18) est reliée à l'environnement et dans un deuxième état de commutation, la chambre à air (18) est fermée à l'environnement.

7. Monture hydraulique selon la revendication 6, **caractérisé en ce que** le clapet anti-retour (33) est actif dans le deuxième état de commutation.

8. Monture hydraulique (10) selon l'une des revendications 1 à 7, **caractérisée en ce que** le dispositif anti-retour (20) est commutable au moyen d'un électro-aimant (28).

9. Monture hydraulique selon l'une des revendications 1 à 8, **caractérisé en ce que** le dispositif anti-retour (20) est reçu dans un élément de pot (29) qui est relié au support (30).

10. Monture hydraulique selon l'une des revendications 1 à 9, **caractérisé en ce que** la plaque de séparation (21) tournée vers la chambre de travail (13) est conçue comme une plaque à buses.

11. Monture hydraulique selon l'une des revendications 1 à 10, **caractérisée en ce que** l'ouverture (23) est faite dans la plaque de séparation (21) opposée à la chambre de travail (13).
